**Europäisches Patentamt**

(19) **European Patent Office**

**Office européen des brevets**

(11) Publication number : **0 420 371 B1**

(12) **EUROPEAN PATENT SPECIFICATION**

(45) Date of publication of patent specification :
**14.06.95 Bulletin 95/24**

(21) Application number : **90301250.8**

(22) Date of filing : **06.02.90**

(51) Int. Cl.⁶ : **H02K 9/06, F04D 29/66**

(54) **An electrical rotary machine and a centrifugal fan for use in an electrical rotary machine.**

(30) Priority : **27.09.89 GB 8921806**

(43) Date of publication of application :
**03.04.91 Bulletin 91/14**

(45) Publication of the grant of the patent :
**14.06.95 Bulletin 95/24**

(84) Designated Contracting States :
**DE FR GB IT**

(56) References cited :
**EP-A- 0 213 981**
**DE-A- 2 007 321**
**DE-A- 3 500 069**

(56) References cited :
**IBM TECHNICAL DISCLOSURE BULLETIN.
vol. 16, no. 7, 7 December 1973, NEW YORK US
page 2126 O.R.GUPTA, J.H.MORRIS:
"DUAL-CUTOFF SCROLL FOR CEN-
TRIFUGALBLOWER"
PATENT ABSTRACTS OF JAPAN vol. 9, no. 56
(E-302) (1179) 12 March 1985, & JP-A-59 194651**

(73) Proprietor : **LUCAS INDUSTRIES PUBLIC
LIMITED COMPANY
Brueton House, New Road
Solihull, West Midlands B91 3TX (GB)**

(72) Inventor : **Russell, Michael Frederick
16 Copthall Corner
Chalfont St. Peter, Bucks. SL9 0BZ (GB)**

(74) Representative : **Knott, Stephen Gilbert et al
MATHISEN, MACARA & CO.
The Coach House
6-8 Swakeleys Road
Ickenham Uxbridge Middlesex UB10 8BZ (GB)**

EP 0 420 371 B1

## Description

This invention relates to electrical rotary machines and particularly, though not exclusively, to automobile alternators. The invention is concerned primarily with fans employed in such machines to effect cooling of component parts.

Over recent years, it has become possible to design electrical rotary machines which have high output power densities and yet are relatively compact.

Accordingly, greater emphasis is now being placed upon the efficient cooling of component parts, such as the machine windings, magnetic components, brushes, bearings etc.

Also, in the case of machines, such as automobile alternators, which have some form of electronic control, there is a requirement to cool the associated electrical circuitry.

It has been customary to effect cooling using a centrifugal fan which is usually mounted at one end of the machine in order to draw cooling air through the machine body.

Some known machines have externally mounted fans. However, these tend to be unsatisfactory in that the cooling air must pass through openings in the drive end shield of the machine before entering the fan, and this creates wakes which subject the fan blades to rapidly fluctuating pressure pulses, giving rise to excessive noise levels.

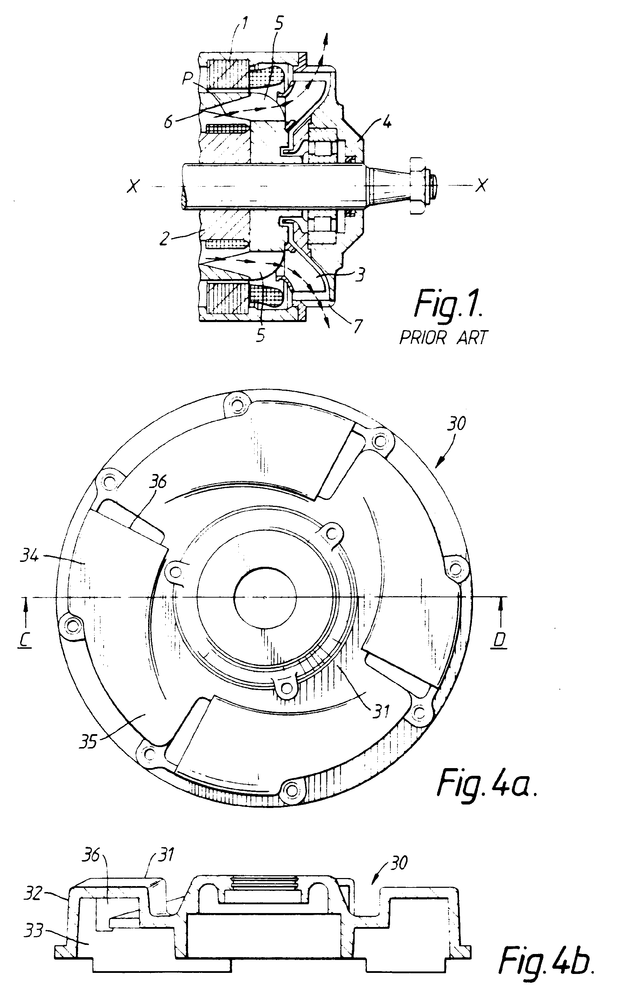

Other, known electrical rotary machines have internally mounted fans. Figure 1 of the accompanying drawings shows a longitudinal sectional view through the downstream end of an electrical rotary machine (an automobile alternator) having an internally mounted fan.

Referring to Figure 1, the alternator has a machine body including a stator 1, a rotor 2 mounted on a central bearing within the stator, a centrifugal fan 3 attached to the rotor and an end shield 4 which houses the fan 3 and is attached to the stator.

As is usually the case, the rotor 2 has a number of so-called salient poles 5 arranged symmetrically around the axis of rotation X-X. A respective opening (e.g. 6) between each pair of neighbouring poles enables cooling air to exit the machine body (e.g. along path P) for admittance to the fan. The air streams exiting the machine body in this way expand into a space between the end face of the rotor and the fan, and mixing of the air streams takes place. Consequently, the air (which is usually hot) enters the fan in a turbulent condition thereby subjecting the fan blades to fluctuating loadings and generating high noise levels, especially at relatively high fan velocities.

This problem is exacerbated if, as is usually the case, the air around the rotor has a non-uniform temperature profile, as can arise, for example, as a result of constructional irregularities and localised imperfections in the material from which the rotor and/or stator are manufactured.

As will be clear from Figure 1, the air is discharged by the fan through openings 7 in the end shield, and this give rise to a further problem. In operation, the rotating blade tips shed wakes which impinge on the structures around openings 7 thereby generating a siren-like tone, which is particularly intense at high rotational velocities.

EP-A-0213,981 describes another example of an electrical rotary machine having an internally mounted fan. In this example, some of the fan blades extend towards a chamfered edge surface of the machine rotor so as to increase the surface area of the blades without increasing the outside diameter of the fan.

According to a first aspect of the invention, there is provided an electrical rotary machine comprising a machine body incorporating a stator and a rotor having a planar end face, and a centrifugal fan mounted on said rotor, and having a plurality of angularly-spaced fan blades effective, in use, to draw a stream of cooling air through the machine body, some, but not all, of said plurality of fan blades being configured directly to abut the rotor, characterised in that the fan blades which abut the rotor inhibit substantial mixing and expansion of cooling air before the air is admitted to the fan, and the fan blades which do not directly abut the rotor are set back from the planar end face of the rotor to provide a gap between each non-abutting fan blade and said planar end face of the rotor.

With this arrangement, the cooling air enters the fan in a less turbulent condition than is the case in hitherto known arrangements, resulting in a more uniform loading on the fan blades and a reduced noise level, and gives increased through-put of cooling air.

In a preferred embodiment, the rotor has a plurality of salient poles, and a respective said fan blade abuts directly each said pole.

The blades which directly abut the rotor may be arranged symmetrically about the rotation axis of the rotor, and the blades which do not abut the rotor may be arranged at irregular angular intervals about the rotation axis.

In a preferred embodiment of the invention, the electrical rotary machine has an end shield comprising a side wall defining an annular settling chamber around the periphery of the centrifugal fan and an end wall

2

formed with an outlet through which air is discharged from the settling chamber, the outlet comprising two or more ducts configured to cause progressive expansion of air before the air is discharged.

Each said duct may have a cross-sectional area which increases progressively in the direction from the inlet end of the duct to the outlet end of the duct.

For optimum operation it has been found that the fan should preferably have at least fourteen blades.

According to another aspect of the invention, there is provided a centrifugal fan for use in an electrical rotary machine, according to the first aspect of the invention, the centrifugal fan comprising a mounting plate by which the centrifugal fan can be mounted on the rotor of the electrical rotary machine and a plurality of angularly-spaced fan blades, some, but not all of the fan blades projecting beyond one side, the upstream side in use of the mounting plate characterised in that the fan blades which do not project beyond said one side of the mounting plate are set back from the opposite side, the downstream side in use of the mounting plate to provide a gap between each such non-projecting blade and a rotor on which the centrifugal fan is mounted.

The projecting and non-projecting blades may be arranged at regular and irregular angular intervals respectively around the axis of rotation of the rotary body. Alternatively, all the blades (both projecting and non-projecting) may be arranged at irregular intervals around the rotation axis.

An embodiment of the invention will now be described, by way of example only, with reference to the accompanying drawings in which:

Figure 1 shows a longitudinal, sectional view through the upstream end of a hithertoknown automobile alternator;

Figure 2 shows a longitudinal sectional view through part of the upstream end of an electrical rotary machine in accordance with the present invention;

Figure 3 shows a plan view of the centrifugal fan used in the electrical rotary machine of Figure 2;

Figure 4a shows a plan view of the end shield of the electrical rotary machine shown in Figure 2; and

Figure 4b shows a transverse sectional view through the end shield on the line C-D in Figure 4a.

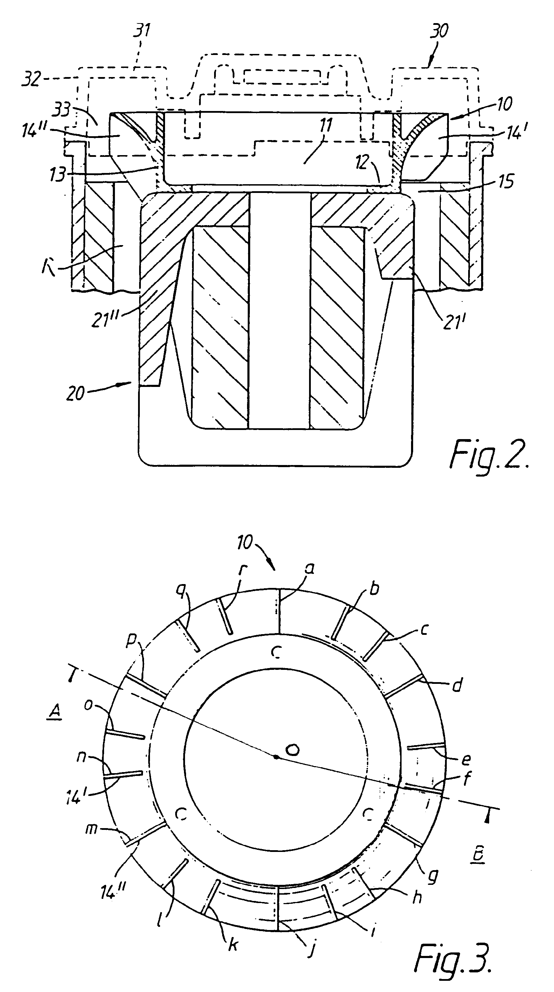

Referring now to Figure 2, the centrifugal fan, shown generally at 10, is mounted centrally on the end face of a rotor 20 which forms part of a compact electrical rotary machine, such as an automobile alternator.

The rotor 20 has six salient poles 21 which are arranged symmetrically around the rotation axis YY, and Figure 2 shows (different) longitudinal sectional views through two of the salient poles 21',21'', on diametrically opposite sides of the rotor. These sectional views are taken at the same angular positions as the sections through fan 10, indicated by the lines AO and OB in the plan view of the fan shown in Figure 3.

In operation, the fan draws cooling air through the machine body to effect cooling of component parts. The cooling air is entrained by the rotor in the annular space R (between the stator and rotor), and approaches the fan along a respective channel between each pair of neighbouring salient poles, as well as along the gap between the salient poles and the stator.

The fan comprises a generally hollow rotary structure 11 having an annular mounting plate 12, by which the fan is mounted on the end face of the rotor, a generally cylindrical side wall 13 and a plurality of fan blades 14 arranged at angular intervals around the periphery of the side wall (as is best shown in Figure 3). In this embodiment, the fan has an integral construction, being formed as a casting of a suitable metal (e.g. aluminium), or from a cast-plastics material, although non-integral constructions (such as pressed metal sheet constructions) could alternatively be used.

Experiments have shown that preferably at least fourteen blades are needed to draw sufficient cooling air through the relatively compact electrical rotary machines (typically having frame diameters between 12 cm and 20 cm) with which the present invention is primarily, though not exclusively, concerned.

In the illustrated embodiment, the fan has eighteen blades, and while most of these (i.e. the blades referenced 14') terminate on the downstream side of the mounting plate, so as to define a gap 15 between the upstream edge of the blade and the end face of the rotor, the other blades (i.e. those referenced 14'') project beyond the mounting plate, on the upstream side thereof. As shown in Figure 3, six of the eighteen blades (each corresponding to a respective salient pole) project in this way.

As will be clear from Figure 2, the projecting part of each blade 14'' is generally concave, and is so profiled as to abut directly a respective salient pole 21' of the rotor. Alternatively, each blade 14'' could abut the plane-faced pole claw.

As has been described hereinbefore with reference to Figure 1, some known electrical rotary machines have the drawback that the cooling air enters the fan in a turbulent condition. This subjects the fan blades to fluctuating loads which, in turn, gives rise to high noise levels, especially at relatively high fan velocities.

In contrast, the fan described with reference to Figure 2 inhibits substantial mixing of the different air streams before they enter the fan, thereby reducing turbulence and alleviating the afore-mentioned shortcomings associated with known fan configurations.

In effect each pair of neighbouring, projecting blades 14'' defines an extension of the channel between the corresponding salient poles 21. In this way, the air stream passing along each channel, between a respective pair of salient poles, is ducted directly into the fan without being mixed with the air-streams associated with other pairs of poles. Consequently, a more uniform loading of the fan blades is achieved, and this reduces the level of noise produced in operation. Moreover, with this arrangement, the cooling air does not undergo expansion before entering the fan, and so there is little, if any, dissipation of angular momentum gained by the air in space R, due to rotation of the rotor relative to the stator. The rotational energy retained by the air is imparted to the fan blades, giving improved operational efficiency.

Because of the improved efficiency attainable with the described fan arrangement, the fan diameter may be reduced (typically by about 6 mm), and this also contributes to a reduction in the noise level.

It is important that the fan blade array should not unduly restrict the flow of cooling air and, in order to maximise the flow, the air inlet to the fan should have an area which is approximately the same as that available for the flow of cooling air between the stator and the rotor. This is accomplished by setting the non-projecting blades 14' back from the rotor, so as to provide a relatively wide inlet opening for the admittance of cooling air.

As taught by British Patent No. 1293553, it is possible to reduce the level of noise, produced at relatively high fan speeds, by spacing the blades irregularly.

Accordingly, in this embodiment, the non-projecting blades 14' are arranged at irregular angular intervals between the projecting blades 14" (which, in this example, are arranged roughly symmetrically around the rotation axis in order to abut the salient poles).

Referring to Figure 3, the blades are positioned as indicated in the following chart, in which the angular position of each blade (b to r) is expressed in terms of its angular separation from the blade referenced "a", at 0°.

| Blade | Projecting Blade (14") | Non-Projecting Blade (14') |
|---|---|---|
| a | 0 | |
| b | | 24° |
| c | | 40° |
| d | 58.5° | |
| e | | 85.5° |
| f | | 99.9° |
| g | 117.5° | |
| h | | 140.5° |
| i | | 157° |
| j | 178° | |
| k | | 206° |
| l | | 223° |
| m | 242° | |
| n | | 264° |
| o | | 278.5° |
| p | 299° | |
| q | | 325° |
| r | | 340° |

It will be appreciated that Figure 3 shows only one possible configuration for the blades, and that many other configurations are possible.

As shown in Figure 2, fan 10 is housed within an end shield 30, shown in broken outline. The end shield is also shown in greater detail in Figures 4a and 4b.

The end shield has an end wall 31 and a cylindrical side wall 32 which extends around the periphery of the fan blade array.

The side wall 32 defines an annular settling chamber 33 within which the air streams created by the fan, and the wakes generated at the tips of the blades can mix.

Since, in this embodiment, the fan may have a relatively small diameter, the settling chamber 33 is sufficiently large that mixing takes place therein without generating excessive noise, even at relatively high fan speeds.

In order to match the pressure head generated by the fan to that across the machine, the end shield has four expanded openings 34 by which air in the annular space 33 is discharged to the exterior.

4

The openings 34 are formed in the end wall 31 and are arranged symmetrically about the centre thereof. Each opening 34 consists of a curved, horn-like duct having a cross-sectional area which increases progressively from an inlet end 35 thereof, which opens into the annular space 33, to an outlet 36 end thereof. This arrangement is found to be compact, and yet enables an increased through-put of cooling air. Furthermore, the expanded openings act as an acoustic, low pass filter leading to a further reduction in the noise level.

The described construction enables a greater through-put of cooling air than has been achieved using known arrangements, with reduced noise levels at both high and low fan velocities.

## Claims

1. An electrical rotary machine comprising a machine body incorporating a stator and a rotor (20) having a planar end face, and a centrifugal fan (10) mounted on said rotor (20), and having a plurality of angularly-spaced fan blades (14) effective, in use, to draw a stream of cooling air through the machine body, some (14″), but not all, of said plurality of fan blades (14) being configured directly to abut the rotor (20), characterised in that the fan blades (14″) which abut the rotor (20) inhibit substantial mixing and expansion of cooling air before the air is admitted to the fan (10), and the fan blades (14′) which do not directly abut the rotor (20) are set back from the planar end face of the rotor (20) to provide a gap (15) between each non-abutting fan blade (14′) and said planar end face of the rotor (20).

2. An electrical rotary machine as claimed in claim 1, characterised in that the fan blades (14″) which directly abut the rotor (20) are arranged symmetrically about the rotation axis of the rotor (20).

3. An electrical rotary machine as claimed in claim 1 or claim 2, characterised in that the rotor (20) comprises a plurality of salient poles (21) and a respective said fan blade (14″) directly abuts each said salient pole (21).

4. An electrical rotary machine as claimed in any one of claims 1 to 3, characterised in that the fan blades (14″) which do not abut the rotor (20) are arranged at irregular angular intervals about the rotation axis of the rotor (20).

5. An electrical rotary machine as claimed in any one of claims 1 to 4, characterised by an end shield (30) having a side wall (32) defining an annular settling chamber (33) around the periphery of the fan (10), and an outlet through which air in the settling chamber is discharged to the exterior.

6. An electrical rotary machine as claimed in claim 5, characterised in that the outlet comprises two or more (preferably four) ducts (34) so configured to cause progressive expansion of the air before the air is discharged to the exterior.

7. An electrical rotary machine as claimed in claim 6, characterised in that each duct (34) has a cross-sectional area which increases progressively in the direction from the inlet end (35) thereof to the outlet end (36) thereof.

8. An electrical rotary machine as claimed in any one of claims 1 to 4, characterised by an end shield (30) comprising a side wall (32) defining an annular settling chamber (33) around the periphery of the centrifugal fan (10) and an end wall (31) formed with an outlet (34) through which air is discharged from the settling chamber (33), the outlet (34) comprising two or more ducts (34) configured to cause progressive expansion of air before the air is discharged.

9. An electrical rotary machine as claimed in claim 8, characterised in that each said duct (34) has a transverse cross-sectional area which progressively increases in the direction from the inlet end (35) of the duct (34) to the outlet end (36) of the duct (34).

10. An electrical rotary machine as claimed in claim 9, characterised in that the outlet has four said ducts (34).

11. An electrical rotary machine as claimed in any one of claims 1 to 10, characterised in that the centrifugal fan (10) has at least fourteen blades (14).

**12.** A centrifugal fan for use in an electrical rotary machine as claimed in claim 1, the centrifugal fan comprising a mounting plate (12) by which the centrifugal fan can be mounted on the rotor (20) of the electrical rotary machine and a plurality of angularly-spaced fan blades (14), some (14″), but not all of the fan blades (14) projecting beyond one side, the upstream side in use of the mounting plate (12) characterised in that the fan blades (14′) which do not project beyond said one side of the mounting plate (12) are set back from the opposite side, the downstream side in use of the mounting plate (12) to provide a gap (15) between each such non-projecting blade (14′) and a rotor (20) on which the centrifugal fan is mounted.

**13.** A centrifugal fan as claimed in claim 12, characterised in that the projecting and non-projecting blades (14″,14′) are arranged at regular and irregular angular intervals respectively about the rotation axis of the mounting plate (12).

**14.** A centrifugal fan as claimed in claim 12 characterised in that all the blades (14) are arranged at irregular angular intervals about the rotation axis of the mounting plate (12).


**Patentansprüche**

**1.** Elektrische Rotationsmaschine, die ein Maschinengehäuse umfaßt, das einen Ständer und einen Läufer (20) mit einer planen Abschlußfläche einschließt, sowie ein Zentrifugalgebläse (10), das an dem Läufer (20) angebracht ist und eine Vielzahl von winklig beabstandeten Gebläseflügeln (14) aufweist, die in Funktion einen Strom Kühlluft durch das Maschinengehäuse saugen, wobei einige (14″), jedoch nicht alle der Vielzahl von Gebläseflügeln (14) so geformt sind, daß sie direkt an dem Läufer (20) anstoßen, **dadurch gekennzeichnet**, daß die Gebläseflügel (14″), die an dem Läufer (20) anstoßen, verhindern, daß sich Kühlluft nennenswert vermischt und ausdehnt, bevor die Luft in das Gebläse (10) eingelassen wird, und die Gebläseflügel (14′), die nicht direkt an dem Läufer (20) anstoßen, gegenüber der planen Abschlußfläche des Läufers (20) zurückgesetzt sind und so einen Zwischenraum (15) zwischen jedem nichtanstoßenden Gebläseflügel (14′) und der planen Endfläche des Läufers (20) bilden.

**2.** Elektrische Rotationsmaschine nach Anspruch 1, **dadurch gekennzeichnet**, daß die Gebläseflügel (14″), die direkt an dem Läufer (20) anstoßen, symmetrisch um die Drehachse des Läufers (20) herum angeordnet sind.

**3.** Elektrische Rotationsmaschine nach Anspruch 1 oder Anspruch 2, **dadurch gekennzeichnet**, daß der Läufer (20) eine Vielzahl von Einzelpolen (21) umfaßt, und daß ein entsprechender Gebläseflügel (14″) direkt an jedem Einzelpol (21) anstößt.

**4.** Elektrische Rotationsmaschine nach einem der Ansprüche 1 bis 3, **dadurch gekennzeichnet**, daß die Gebläseflügel (14″), die nicht an dem Läufer (20) anstoßen, in unregelmäßigen Winkelabständen um die Drehachse des Läufers (20) herum angeordnet sind.

**5.** Elektrische Rotationsmaschine nach einem der Ansprüche 1 bis 4, **gekennzeichnet durch** ein Lagerschild (30) mit einer Seitenwand (32), die eine ringförmige Absetzkammer (33) um den Umfang des Gebläses (10) herum begrenzt, und mit einem Auslaß, durch den Luft in der Absetzkammer nach außen ausgestoßen wird.

**6.** Elektrische Rotationsmaschine nach Anspruch 5, **dadurch gekennzeichnet**, daß der Auslaß zwei oder mehr (vorzugsweise vier) Kanäle (34) umfaßt, die so aufgebaut sind, daß sie zunehmende Ausdehnung der Luft bewirken, bevor die Luft nach außen ausgestoßen wird.

**7.** Elektrische Rotationsmaschine nach Anspruch 6, **dadurch gekennzeichnet**, daß jeder Kanal (34) eine Querschnittsfläche hat, die in der Richtung vom Einlaßende (35) desselben zum Auslaßende (36) desselben zunehmend größer wird.

**8.** Elektrische Rotationsmaschine nach einem der Ansprüche 1 bis 4, **gekennzeichnet durch** ein Lagerschild (30), das eine Seitenwand (32) umfaßt, die eine ringförmige Absetzkammer (33) um den Umfang des Zentrifugalgebläses (10) herum begrenzt, sowie eine Abschlußwand (31), die mit einem Auslaß (34) versehen ist, durch den Luft aus der Absetzkammer (33) ausgestoßen wird, wobei der Auslaß (34) zwei oder mehr Kanäle (34) umfaßt, die so aufgebaut sind, daß sie zunehmende Ausdehnung der Luft bewirken, bevor die Luft ausgestoßen wird.

9. Elektrische Rotationsmaschine nach Anspruch 8, **dadurch gekennzeichnet**, daß jeder Kanal (34) in Querrichtung eine Querschnittsfläche hat, die in der Richtung vom Einlaßende (35) des Kanals (34) zum Auslaßende (36) des Kanals (34) zunehmend größer wird.

10. Elektrische Rotationsmaschine nach Anspruch 9, **dadurch gekennzeichnet**, daß der Auslaß vier Kanäle (34) hat.

11. Elektrische Rotationsmaschine nach einem der Ansprüche 1 bis 10, **dadurch gekennzeichnet**, daß das Zentrifugalgebläse (10) wenigstens vierzehn Flügel (14) hat.

12. Zentrifugalgebläse zum Einsatz in einer elektrischen Rotationsmaschine nach Anspruch 1, wobei das Zentrifugalgebläse eine Montageplatte (12) umfaßt, mit der das Zentrifugalgebläse an dem Läufer (20) der elektrischen Rotationsmaschine angebracht werden kann, sowie eine Vielzahl von winklig beabstandeten Gebläseflügeln (14), wobei einige (14″), jedoch nicht alle der Gebläseflügel (14) über eine Seite, d.h., die in Funktion stromauf gelegene Seite, der Montageplatte (12) vorstehen, **dadurch gekennzeichnet**, daß die Gebläseflügel (14′), die nicht über die eine Seite der Montageplatte (12) vorstehen, von der gegenüberliegenden Seite, d.h., der in Funktion stromab gelegenen Seite, der Montageplatte (12) zurückgesetzt sind und so einen Zwischenraum (15) zwischen jedem derartigen nichtvorstehenden Flügel (14′) und einem Läufer (20) bilden, an dem das Zentrifugalgebläse angebracht ist.

13. Zentrifugalgebläse nach Anspruch 12, **dadurch gekennzeichnet**, daß die vorstehenden und nichtvorstehenden Flügel (14″, 14′) in regelmäßigen bzw. unregelmäßigen Winkelabständen um die Drehachse der Montageplatte (12) herum angeordnet sind.

14. Zentrifugalgebläse nach Anspruch 12, **dadurch gekennzeichnet**, daß alle Flügel (14) in unregelmäßigen Winkelabständen um die Drehachse der Montageplatte (12) herum angeordnet sind.

## Revendications

1. Machine électrique tournante comprenant un corps de machine ayant un stator et un rotor (20) qui a une face plane d'extrémité, et un ventilateur centrifuge (10) monté sur le rotor (20) et ayant plusieurs pales (14) de ventilateur espacées angulairement et qui, pendant l'utilisation, assurent l'aspiration d'un courant d'air de refroidissement circulant dans le corps de la machine, certaines (14″) des pales (14) du ventilateur, mais non la totalité, ayant une configuration telle qu'elles sont directement en butée contre le rotor (20), caractérisée en ce que les pales (14″) du ventilateur qui sont en butée contre le rotor (20) empêchent un mélange et une détente importants de l'air de refroidissement avant que celui-ci ne soit admis dans le ventilateur (10), et les pales (14′) du ventilateur qui ne sont pas directement en butée contre le rotor (20) sont décalées de la face plane d'extrémité du rotor (20) afin qu'elles forment un espace (15) entre chaque pale (14′) de ventilateur qui n'est pas en butée et la face plane d'extrémité du rotor (20).

2. Machine électrique tournante selon la revendication 1, caractérisée en ce que les pales (14″) du ventilateur qui sont directement en butée contre le rotor (20) sont placées symétriquement autour de l'axe de rotation du rotor (20).

3. Machine électrique tournante selon la revendication 1 ou 2, caractérisée en ce que le rotor (20) comporte plusieurs pôles saillants (21) et une pale respective de ventilateur (14″) est directement en butée contre chaque pôle saillant (21).

4. Machine électrique tournante selon l'une quelconque des revendications 1 à 3, caractérisée en ce que les pales de ventilateur (14″) qui ne sont pas en butée contre le rotor (20) sont placées à intervalles angulaires irréguliers autour de l'axe de rotation du rotor (20).

5. Machine électrique tournante selon l'une quelconque des revendications 1 à 4, caractérisée par un capot (30) d'extrémité ayant une paroi latérale (32) qui délimite une chambre annulaire (33) de régularisation autour de la périphérie du ventilateur (10), et une sortie par laquelle l'air de la chambre de régularisation est évacué vers l'extérieur.

7

6. Machine électrique tournante selon la revendication 5, caractérisée en ce que la sortie comprend au moins deux conduits (34) (quatre de préférence) dont la configuration est telle qu'ils provoquent une détente progressive de l'air avant que celui-ci ne soit évacué vers l'extérieur.

7. Machine électrique tournante selon la revendication 6, caractérisée en ce que chaque conduit (34) a une section qui augmente progressivement de son extrémité d'entrée (35) vers son extrémité de sortie (36).

8. Machine électrique tournante selon l'une quelconque des revendications 1 à 4, caractérisée par un capot d'extrémité (30) comprenant une paroi latérale (32) qui délimite une chambre annulaire (33) de régularisation autour de la périphérie du ventilateur centrifuge (10), et une paroi d'extrémité (31) ayant une sortie (34) par laquelle l'air est évacué de la chambre de régularisation (33), la sortie (34) comprenant au moins deux conduits (34) dont la configuration provoque une détente progressive de l'air avant son évacuation.

9. Machine électrique tournante selon la revendication 8, caractérisée en ce que chaque conduit (34) a une section transversale qui augmente progressivement de l'extrémité d'entrée (35) du conduit (34) vers l'extrémité de sortie (36) du conduit (34).

10. Machine électrique tournante selon la revendication 9, caractérisée en ce que la sortie possède quatre conduits (34).

11. Machine électrique tournante selon l'une quelconque des revendications 1 à 10, caractérisée en ce que le ventilateur centrifuge (10) possède au moins quatorze pales (14).

12. Ventilateur centrifuge destiné à être utilisé dans une machine électrique tournante selon la revendication 1, le ventilateur centrifuge comprenant une plaque de montage (12) grâce à laquelle le ventilateur centrifuge peut être monté sur le rotor (20) de la machine électrique tournante, et plusieurs pales (14) de ventilateur qui sont régulièrement espacées, certaines des pales (14″), mais non la totalité des pales (14), dépassant au-delà d'un côté, qui est le côté amont pendant l'utilisation de la plaque de montage (12), caractérisé en ce que les pales (14′) du ventilateur qui ne dépassent au-delà dudit côté de la plaque de montage (12) sont décalées en arrière du côté opposé, le côté aval pendant l'utilisation de la plaque de montage (12), afin qu'un espace (15) soit délimité entre chaque pale (14′) qui n'est pas en saillie et un rotor (20) sur lequel est monté le ventilateur centrifuge.

13. Ventilateur centrifuge selon la revendication 12, caractérisé en ce que les pales en saillie et non en saillie (14″, 14′) sont placées à intervalles angulaires réguliers et irréguliers respectivement autour de l'axe de rotation de la plaque de montage (12).

14. Ventilateur centrifuge selon la revendication 12, caractérisé en ce que toutes les pales (14) sont placées à des intervalles angulaires irréguliers autour de l'axe de rotation de la plaque de montage (12).

Fig.1.
PRIOR ART

Fig.4a.

Fig.4b.

Fig.2.

Fig.3.